# EUROPÄISCHE PATENTANMELDUNG

(11) **EP 1 990 130 A1**
(43) Veröffentlichungstag der Anmeldung: **12.11.2008**
(21) Anmeldenummer: 08003237.8
(22) Anmeldetag: 22.02.2008
(51) Int. Cl.: B23Q 11/08, B24B 9/00, F16P 3/00

(54) **Kantenbearbeitungsmaschine**

(30) Priorität: 10.05.2007 DE 102007023171
(71) Anmelder: Reich Spezialmaschinen GmbH, 72622 Nürtingen (DE)
(72) Erfinder: Eisinger, Uwe, 72622 Nürtingen (DE); Henzler, Roland, 72622 Nürtingen (DE); Lorber, Denis, 72663 Grossbettlingen (DE)
(74) Vertreter: Hoeger, Stellrecht & Partner Patentanwälte

(57) **Zusammenfassung**

Die Erfindung betrifft eine Kantenbearbeitungsmaschine mit einem Maschinengestell zur Anordnung von zumindest einem Bearbeitungsaggregat zum Bearbeiten der Kanten eines plattenförmigen Werkstückes, und mit mindestens einer Haube zum Abdecken von zumindest einem Bearbeitungsaggregat, wobei die Haube ein bewegliches Haubenteil aufweist, das zwischen einer Schließstellung und einer Offenstellung hin und her bewegbar ist. Um die Kantenbearbeitungsmaschine derart weiterzubilden, dass der zum Öffnen und Schließen der Haube erforderliche Bauraum verringert und das Öffnen und Schließen der Haube vereinfacht werden kann, wird erfindungsgemäß vorgeschlagen, dass das bewegliche Haubenteil vertikal verschiebbar gehalten ist, wobei die Schiebebewegung des beweglichen Haubenteils von einem elektromotorischen, pneumatischen oder hydraulischen Antrieb zumindest unterstützt ist.

## Beschreibung

Die Erfindung betrifft eine Kantenbearbeitungsmaschine mit einem Maschinengestell zur Anordnung von zumindest einem Bearbeitungsaggregat zum Bearbeiten der Kanten eines plattenförmigen Werkstückes, und mit mindestens einer Haube zum Abdecken von zumindest einem Bearbeitungsaggregat, wobei die Haube ein bewegliches Haubenteil aufweist, das zwischen einer Schließstellung und einer Offenstellung hin und her bewegbar ist.

Derartige Kantenbearbeitungsmaschinen kommen insbesondere in Form von Kantenanleimmaschinen zum Einsatz, mit deren Hilfe an die Kanten eines plattenförmigen Werkstückes ein Umleimer angeleimt werden kann. Überstehendes Umleimermaterial kann üblicherweise abgetrennt werden und zusätzlich können die Ecken und Kanten bearbeitet, insbesondere gefräst und/oder poliert werden. Häufig werden die plattenförmigen Werkstücke während ihrer Bearbeitung fortlaufend mittels einer Fördereinrichtung der Kantenbearbeitungsmaschine entlang einer Vorschubrichtung bewegt, so dass die gesamte Bearbeitung des Werkstückes während dessen Transportes erfolgt.

Die zum Einsatz kommenden Bearbeitungsaggregate werden üblicherweise aus Sicherheitsgründen von Hauben abgedeckt. Um jedoch einen Zugang zu den Bearbeitungsaggregaten zu ermöglichen, weisen die Hauben ein bewegliches Haubenteil auf, das zwischen einer Schließstellung und einer Offenstellung hin und her bewegbar ist. In der Offenstellung wird dem Benutzer ein Zugang zum Bearbeitungsaggregat ermöglicht, und in der Schließstellung ist das Bearbeitungsaggregat abgedeckt.

Das bewegliche Haubenteil ist üblicherweise um eine parallel zur Längsrichtung der Kantenbearbeitungsmaschine ausgerichtete Schwenkachse verschwenkbar gelagert und kann ausgehend von seiner Schließstellung vom Benutzer in die dem Maschinengestell abgewandte Richtung nach oben verschwenkt werden. Die verschwenkbare Lagerung des beweglichen Haubenteils hat sich insofern bewährt, als dadurch dem Benutzer eine ausreichend große Zugangsöffnung bereitgestellt wird. Das bewegliche Haubenteil kann in seiner Offenstellung arretiert werden und stellt daher für den Benutzer der Kantenbearbeitungsmaschine keine Beeinträchtigung dar. Zum Öffnen und Schließen der Haube ist allerdings ein beträchtlicher Bauraum erforderlich, da ansonsten das bewegliche Haubenteil nicht ungehindert verschwenkt werden kann. Darüber hinaus befindet sich die untere Kante des beweglichen Haubenteiles, wenn dieses seine Offenstellung einnimmt, in beträchtlichem Abstand zur Stellfläche der Kantenbearbeitungsmaschine und kann daher vom Benutzer bei Einsatz von verhältnismäßig großen Hauben manchmal nur mit Mühe erreicht werden. Problematisch ist häufig auch das nicht unbeachtliche Gewicht des beweglichen Haubenteils, durch das das Bewegen des Haubenteils erschwert wird.

Aufgabe der vorliegenden Erfindung ist es, eine Kantenbearbeitungsmaschine der eingangs genannten Art derart weiterzubilden, dass der zum Öffnen und Schließen der Haube erforderliche Bauraum verringert und das Öffnen und Schließen der Haube vereinfacht werden kann.

Diese Aufgabe wird bei einer Kantenbearbeitungsmaschine der gattungsgemäßen Art erfindungsgemäß dadurch gelöst, dass das bewegliche Haubenteil in vertikaler Richtung verschiebbar gehalten ist, wobei die Schiebebewegung des beweglichen Haubenteils von einem elektromotorischen, pneumatischen oder hydraulischen Antrieb zumindest unterstützt ist.

Die verschiebbare Halterung hat den Vorteil, dass das bewegliche Haubenteil auf einfache Weise zwischen seiner Schließstellung und seiner Offenstellung hin und her bewegt werden kann. Der zum Öffnen und Schließen der Haube erforderliche Bauraum wird reduziert und auch bei groß bauenden Hauben kann das bewegliche Haubenteil in seiner Offenstellung vom Benutzer auf einfache Weise ergriffen werden.

Das bewegliche Haubenteil ist ausgehend von seiner Schließstellung in die dem Maschinengestell abgewandter Richtung nach oben verschiebbar. In seiner Offenstellung ragt das bewegliche Haubenteil nach oben. Der zum Öffnen und Schließen der Haube erforderliche Bauraum vor der Kantenbearbeitungsmaschine kann dadurch besonders gering gehalten werden.

Um dem Benutzer das Verschieben des beweglichen Haubenteils zu erleichtern, wird die Schiebebewegung von einem Antrieb zumindest unterstützt. Das bewegliche Haubenteil kann demzufolge mittels des Antriebes selbsttätig verschiebbar sein, beispielsweise nach Eingabe eines Steuerbefehls durch den Benutzer. Zumindest wird aber das bewegliche Haubenteil vom Antrieb mit einer Schiebekraft beaufschlagt, die das manuelle Verschieben unterstützt. Der Benutzer muss somit zum Verschieben des beweglichen Haubenteils nicht dessen komplettes Gewicht überwinden, sondern zumindest ein Teil des Gewichts wird vom Antrieb übernommen, um das Haubenteil zu verschieben. Der Antrieb kann zum Beispiel als Elektromotor ausgestaltet sein oder auch in Form eines pneumatischen oder hydraulischen Kolben-Zylinderaggregats.

Die Lagerung des beweglichen Haubenteils erfolgt vorzugsweise an einem feststehenden Haubenteil. Es kann beispielsweise vorgesehen sein, dass das bewegliche Haubenteil eine Stirnwand der Haube ausbildet, die an feststehenden Seitenwänden der Haube verschiebbar gehalten ist.

Von besonderem Vorteil ist es, wenn der Hub des beweglichen Haubenteils, also der Weg des beweglichen Haubenteils, den dieses zwischen seiner Schließstellung und seiner Offenstellung zurücklegt, mindestens zwei Drittel seiner vertikalen Erstreckung beträgt. Dadurch wird dem Benutzer in der Offenstellung des beweglichen Haubenteils eine verhältnismäßig große Zugangsöffnung bereitgestellt.

Bei einer besonders bevorzugten Ausführungsform der Erfindung beträgt der Hub des beweglichen Haubenteils mindestens vier Fünftel seiner vertikalen Erstreckung.

Zur Lagerung des beweglichen Haubenteils kommen vorzugsweise Führungsschienen zum Einsatz. Diese sind bei einer vorteilhaften Ausführungsform an einem feststehenden Haubenteil gehalten.

Von besonderem Vorteil ist es, wenn die Führungsschienen als Teleskopschienen ausgestaltet sind. Diese weisen eine feststehende Schiene sowie mindestens eine bewegliche Schiene auf. Die feststehende Schiene kann beispielsweise am feststehenden Haubenteil festgelegt sein und die bewegliche Schiene kann am beweglichen Haubenteil fixiert sein.

Von besonderem Vorteil ist es, wenn die Teleskopschienen zumindest dreiteilig ausgestaltet sind, indem sie eine feststehende Schiene und mindestens zwei bewegliche Schienen umfassen. Die mehr als zweiteilige Ausgestaltung der Teleskopschienen ermöglicht es, den Hub des beweglichen Haubenteils beträchtlich zu erweitern.

Bei einer besonders bevorzugten Ausführungsform der erfindungsgemäßen Kantenbearbeitungsmaschine ist das bewegliche Haubenteil in Führungsprofilen verschiebbar gehalten. Dies ermöglicht eine besonders stabile Halterung des beweglichen Haubenteils.

Es kann beispielsweise vorgesehen sein, dass die Führungsprofile jeweils einen Kantenbereich des beweglichen Haubenteils in sich aufnehmen. Sie können insbesondere U-förmig ausgestaltet sein.

Von besonderem Vorteil ist es, wenn die Führungsprofile bogenförmig gekrümmt sind. Dadurch kann der oberhalb der Kantenmaschine erforderliche Bauraum zum Öffnen der Haube reduziert werden, indem Führungsprofile mit einem bogenförmig nach hinten weisenden Verlauf zum Einsatz kommen. Ausgehend von einer im Wesentlichen vertikalen Ausrichtung in seiner Schließstellung kann dadurch das bewegliche Haubenteil in eine schräg zur Vertikalen ausgerichtete Offenstellung überführt werden.

Günstigerweise stehen die Führungsprofile mit ihren oberen Endbereichen über die Haube hervor. Dadurch kann das bewegliche Haubenteil auch in seiner Offenstellung mit einem unteren Kantenabschnitt zuverlässig in den Führungsprofilen gehalten werden, ohne dass dadurch der Hub des beweglichen Haubenteiles reduziert werden muss.

Um eine möglichst leichtgängige Verschiebung des beweglichen Haubenteils zu erzielen, ist dieses bei einer vorteilhaften Ausgestaltung mittels Rollkörper in den Führungsschienen oder Führungsprofilen verschiebbar gehalten. Mittels der Rollkörper kann die Reibung zwischen den Führungsschienen oder Führungsprofilen und dem beweglichen Haubenteil reduziert werden.

Vorzugsweise umfasst die Kantenbearbeitungsmaschine mehrere nebeneinander angeordnete Hauben, deren einander unmittelbar benachbarte bewegliche Haubenteile an gemeinsamen Führungselementen verschiebbar gehalten sind. Die Anzahl der Führungselemente kann dadurch reduziert werden. Als Führungselemente können beispielsweise die voranstehend bereits erläuterten Führungsprofile zum Einsatz kommen. Hierbei kann zwischen zwei einander unmittelbar benachbarten beweglichen Haubenteilen ein im Querschnitt H-förmiges Führungsprofil angeordnet sein, in das beidseitig jeweils ein Kantenbereich eines beweglichen Haubenteils eintauchen kann.

Die nachfolgende Beschreibung bevorzugten Ausführungsformen der Erfindung dient im Zusammenhang mit der Zeichnung der näheren Erläuterung. Es zeigen:
- Figur 1:: eine perspektivische Darstellung einer ersten Ausführungsform einer erfindungsgemäßen Kantenbearbeitungsmaschine mit geschlossener Haube;
- Figur 2:: eine perspektivische Darstellung der Kantenbearbeitungsmaschine aus Figur 1 mit geöffneter Haube;
- Figur 3:: eine zweite Ausführungsform einer erfindungsgemäßen Kantenbearbeitungsmaschine mit zwei geschlossenen Hauben;
- Figur 4:: eine perspektivische Darstellung der Kantenbearbeitungsmaschine aus Figur 3, wobei eine erste Haube geöffnet ist;
- Figur 5:: eine perspektivische Darstellung der Kantenbearbeitungsmaschine aus Figur 3, wobei zwei Hauben geöffnet sind und
- Figur 6:: eine Seitenansicht der Kantenbearbeitungsmaschine aus Figur 3 mit geöffneten Hauben.

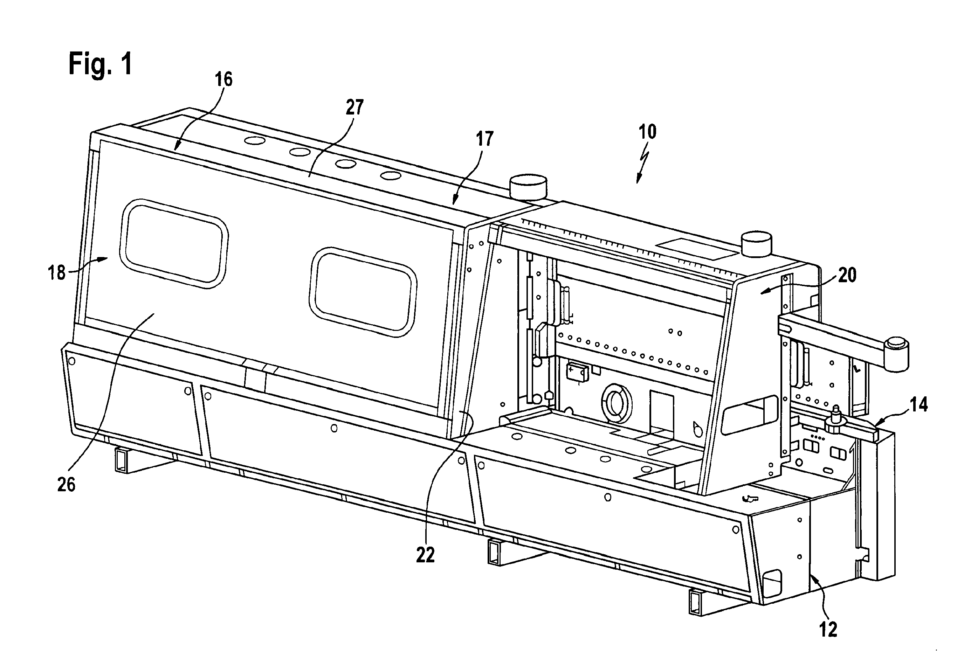

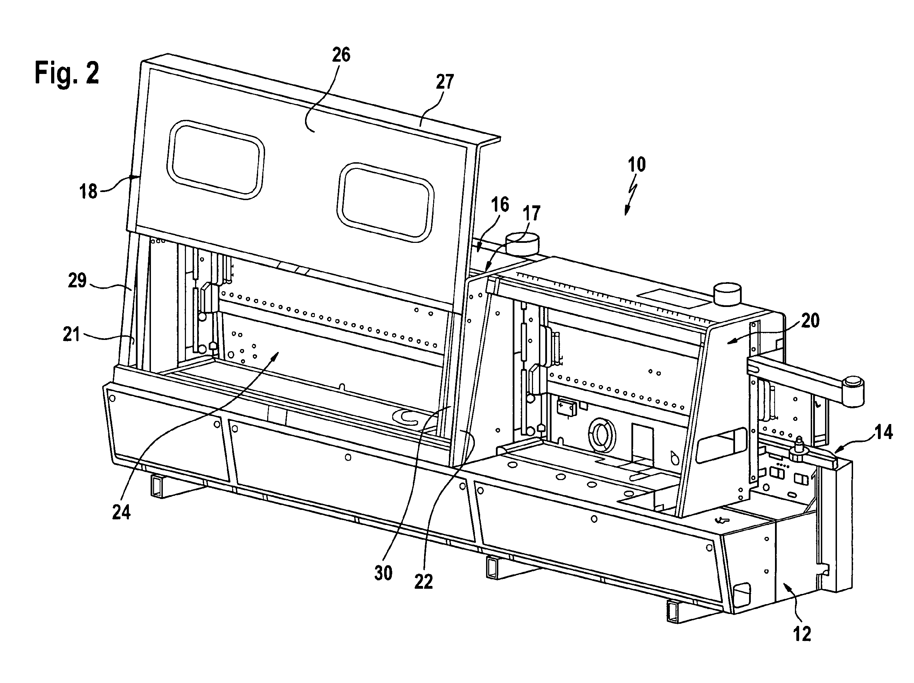

In den Figuren 1 und 2 ist eine erste Ausführungsform einer insgesamt mit dem Bezugszeichen 10 belegten Kantenbearbeitungsmaschine dargestellt. Sie umfasst ein Maschinengestell 12, an dem eine Fördereinrichtung 14 zum Transport plattenförmiger Werkstücke gehalten ist. Während des Transportes der Werkstücke können deren Kanten mittels an sich bekannter und deshalb zur Erzielung einer besseren Übersicht in der Zeichnung nicht dargestellter Bearbeitungsaggregate bearbeitet werden. Insbesondere kann ein Umleimer an die Kanten des Werkstückes angeleimt werden.

Die in den Figuren 1 und 2 dargestellte Kantenbearbeitungsmaschine 10 weist eine Haube 16 mit einem feststehenden Haubenteil 17 und mit einem beweglichen Haubenteil 18 auf. Die Haube 16 erstreckt sich ungefähr über die halbe Länge der Kantenbearbeitungsmaschine 10. Seitlich neben der Haube 16 ist ein Rahmen 20 auf dem Maschinenteil 12 gehalten. Die Haube 16 überdeckt in der Zeichnung nicht dargestellte Bearbeitungsaggregate der Kantenbearbeitungsmaschine 10 und weitere Bearbeitungsaggregate können im Rahmen 20 positioniert werden. Der Rahmen 20 kann beispielsweise ein Kleberauftragaggregat zum Auftragen eines Klebers an die Kanten des Werkstückes aufnehmen sowie ein Druckwerk zum Andrücken eines Umleimers an die Kante, nachdem auf diese der Kleber aufgetragen wurde. Die Haube 16 kann elektromotorisch angetriebene Kappaggregate abdecken, mit denen Überstände des angeleimten Umleimers abgetrennt werden können. Die Haube 16 bildet einen Schallschutz aus und kann innenseitig mit schalldämmendem Material belegt sein.

Das feststehende Haubenteil 17 umfasst eine erste Seitenwand 21 und eine zweite Seitenwand 22, die am Maschinengestell 12 festgelegt sind. Zwischen sich definieren sie eine Zugangsöffnung 24, die vom beweglichen Haubenteil 18 verschlossen werden kann. Letzteres umfasst eine Stirnwand 26 und eine Deckenwand 27, die vom oberen Randbereich der Stirnwand 26 nach hinten absteht.

Das bewegliche Haubenteil 18 ist mittels zweier Führungsschienen 29 und 30 verschiebbar am feststehenden Haubenteil 17 gehalten. Die Führungsschiene 29 ist an der Stirnseite der ersten Seitenwand 21 angeordnet und die Führungsschiene 30 ist an der Stirnseite der zweiten Seitenwand 22 angeordnet. Das bewegliche Haubenteil 18 kann zwischen der in Figur 1 dargestellten Schließstellung und der in Figur 2 dargestellten Offenstellung manuell hin und her verschoben werden. Der Hub des beweglichen Haubenteils 18 beträgt hierbei etwa 80 % von dessen vertikaler Ausdehnung. Die Führungsschienen 29 und 30 sind zur Vertikalen leicht geneigt angeordnet, so dass das bewegliche Haubenteil 18 ausgehend von seiner Schließstellung schräg nach oben verschoben werden kann.

Das bewegliche Haubenteil 18 kann vom Benutzer manuell im Wesentlichen in vertikaler Richtung verschoben werden, wobei die Schiebebewegung von einem pneumatischen Antrieb unterstützt wird. Alternativ könnte auch ein elektrischer oder hydraulischer Antrieb zum Einsatz kommen. Derartige Antriebe sind an sich bekannt und daher in den Figuren 1 und 2 nicht dargestellt.

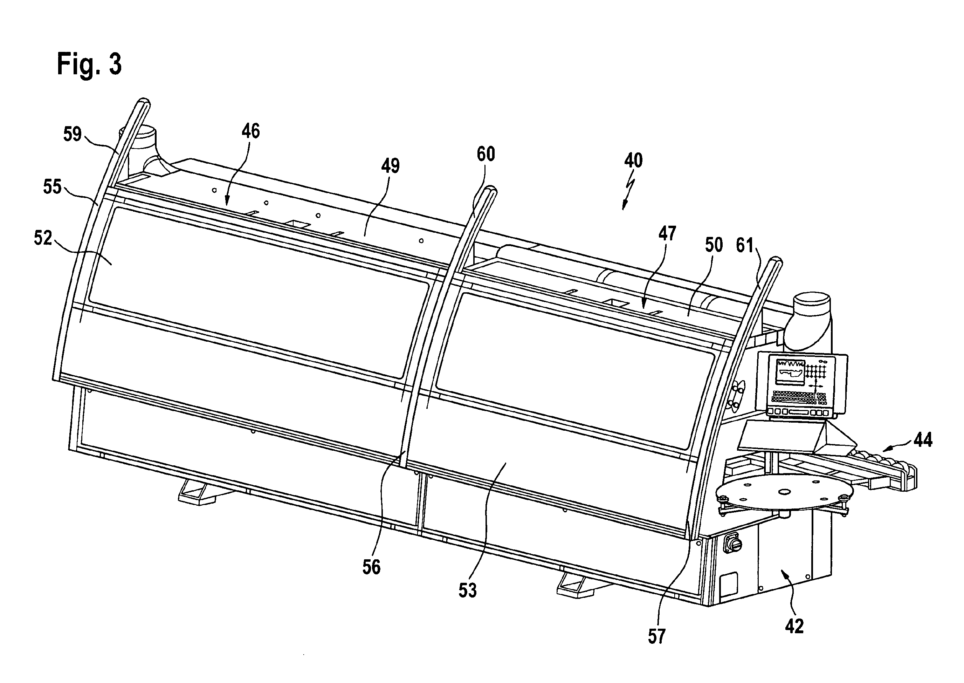

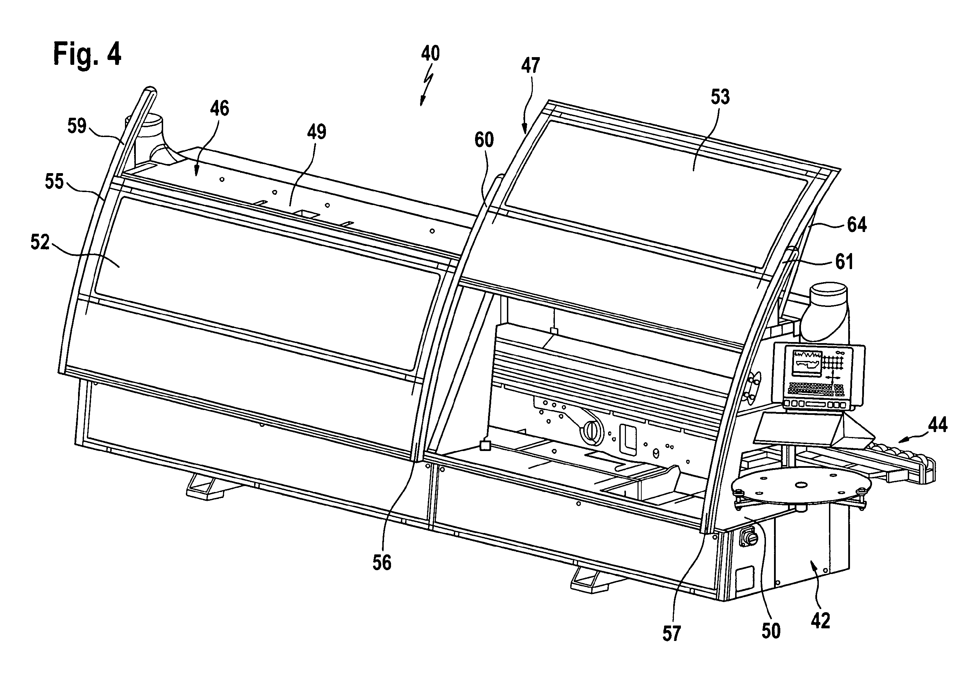

In den Figuren 3 bis 6 ist eine zweite Ausführungsform einer erfindungsgemäßen Kantenbearbeitungsmaschine dargestellt, die insgesamt mit dem Bezugszeichen 40 belegt ist. Sie umfasst ein Maschinengestell 42, an der eine Fördereinrichtung 44 festgelegt ist zum Transport plattenförmiger Werkstücke. Die Kanten der Werkstücke können in entsprechender Weise, wie dies voranstehend unter Bezugnahme auf die in den Figuren 1 und 2 dargestellte Kantenbearbeitungsmaschine 10 bereits erläutert wurde, bearbeitet werden. Die hierzu erforderlichen Bearbeitungsaggregate sind zur Erzielung einer besseren Übersicht in den Figuren 3 bis 6 nicht dargestellt.

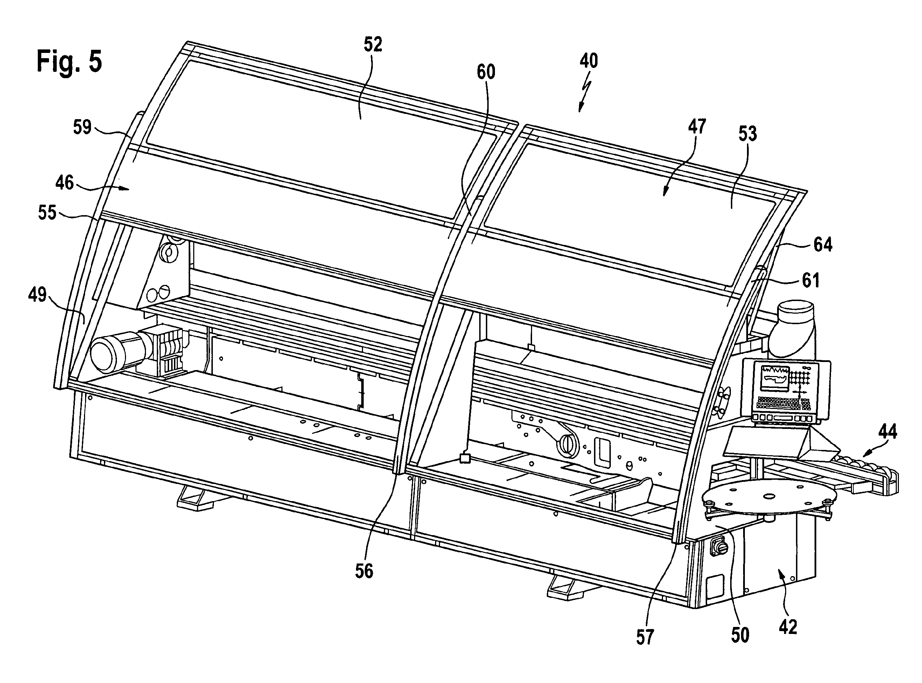

Die Kantenbearbeitungsmaschine 40 weist eine erste Haube 46 und einer zweite Haube 47 auf, die im geschlossenen Zustand die Bearbeitungsaggregate der Kantenbearbeitungsmaschine 40 abdecken. Die beiden Hauben 46, 47 weisen jeweils ein feststehendes Haubenteil 49 bzw. 50 und ein bewegliches Haubenteil 52 bzw. 53 auf. Die beweglichen Haubenteile sind zwischen der in Figur 3 dargestellten Schließstellung und der in Figur 5 dargestellten Offenstellung hin und her verschiebbar. Zur verschiebbaren Halterung kommen Führungsprofile 55, 56 und 57 zum Einsatz. Das mittlere Führungsprofil 56, das zwischen den beiden beweglichen Haubenteilen 52 und 53 angeordnet ist, weist einen H-förmigen Querschnitt auf und nimmt zu beiden Seiten jeweils einen Kantenbereich der beweglichen Haubenteile 52 und 53 auf. Die äußeren Führungsprofile 55 und 57 weisen jeweils einen U-förmigen Querschnitt auf und nehmen jeweils einen äußeren Kantenabschnitt eines beweglichen Haubenteils 52 bzw. 53 auf.

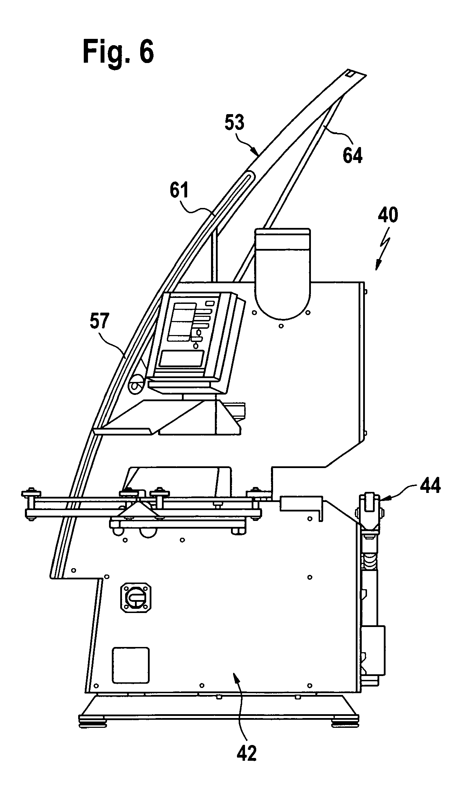

Die Führungsprofile 55, 56 und 57 sind jeweils bogenförmig gekrümmt. Dies wird insbesondere aus Figur 6 deutlich. Mit einem oberen Endabschnitt 59, 60 bzw. 61 ragen die Führungsprofile 55, 56 und 57 über das obere Ende der feststehenden Haubenteile 49 und 50 hervor. In ihrer Schließstellung sind die beweglichen Haubenteile 52 und 53 mit ihren einander zugewandten und ihren einander abgewandten Kanten vollständig in den Führungsprofilen 55, 56 bzw. 57 gehalten. In ihrer Offenstellung ragen die beweglichen Haubenteile 52 und 53 über die Führungsprofile 55, 56 und 57 hervor, die oberen Endabschnitte 59, 60 und 61 nehmen jedoch auch in der Offenstellung der beweglichen Haubenteile 52, 53 noch einen Kantenabschnitt der beweglichen Haubenteile 52, 53 auf. Somit sind die beweglichen Haubenteile 52, 53 auch in ihrer Offenstellung noch stabil in den Führungsprofilen 55, 56, 57 gehalten.

Die Schiebebewegungen der beweglichen Haubenteile 52, 53 der Kantenbearbeitungsmaschine 40 können elektromotorisch, pneumatisch oder auch hydraulisch zumindest unterstützt werden. In der in den Figuren 3 bis 6 dargestellten Ausführungsform kommt ein pneumatischer Antrieb zum Einsatz mit Kolben-Zylinderaggregaten, die jeweils eine an einen oberen Endbereich eines beweglichen Haubenteils 52 bzw. 53 angelenkte Schubstange 64 in vertikaler Richtung bewegen. Mittels des pneumatischen Antriebes sind die beweglichen Haubenteile 52, 53 selbsttätig verschiebbar. Der Benutzer kann hierzu ein Bedienelement, z. B. einen Taster betätigen. Ein entsprechender Steuerbefehl kann auch von einem Steuerungsprogramm ausgelöst werden.

Die beiden beweglichen Haubenteile 52 und 53 können unabhängig voneinander zwischen ihrer Offenstellung und ihrer Schließstellung verschoben werden. In ihrer Schließstellung sind sie zur Vertikalen leicht geneigt ausgerichtet, wohingegen sie in ihrer Offenstellung aufgrund des bogenförmigen Verlaufes der Führungsprofile 55, 56 und 57 eine zur Vertikalen in einem Winkel von annähernd 45° geneigte Stellung einnehmen. Dadurch wird der oberhalb der Kantenbearbeitungsmaschine 40 erforderliche Bauraum zum Öffnen und Schließen der Hauben 46 und 47 reduziert.

## Patentansprüche

1. Kantenbearbeitungsmaschine mit einem Maschinengestell zur Anordnung von zumindest einem Bearbeitungsaggregat zum Bearbeiten der Kanten eines plattenförmigen Werkstückes, und mit mindestens einer Haube zum Abdecken von zumindest einem Bearbeitungsaggregat, wobei die Haube ein bewegliches Haubenteil aufweist, das zwischen einer Schließstellung und einer Offenstellung hin und her bewegbar ist, **dadurch gekennzeichnet, dass** das bewegliche Haubenteil (18; 52, 53) vertikal verschiebbar gehalten ist, wobei die Schiebebewegung des beweglichen Haubenteiles (18; 52, 53) von einem elektromotorischen, pneumatischen oder hydraulischen Antrieb zumindest unterstützt ist.

2. Kantenbearbeitungsmaschine nach Anspruch 1, **dadurch gekennzeichnet, dass** das bewegliche Haubenteil (52, 53) nach Eingabe eines Steuerbefehls durch den Benutzer selbsttätig verschiebbar ist.

3. Kantenbearbeitungsmaschine nach Anspruch 1 oder 2, **dadurch gekennzeichnet, dass** das bewegliche Haubenteil (18; 52, 53) an einem feststehenden Haubenteil (17; 49, 50) verschiebbar gehalten ist.

4. Kantenbearbeitungsmaschine nach Anspruch 1, 2 oder 3, **dadurch gekennzeichnet, dass** der Hub des beweglichen Haubenteiles (18; 52, 53) mindestens zwei Drittel seiner vertikalen Erstreckung beträgt.

5. Kantenbearbeitungsmaschine nach einem der voranstehenden Ansprüche, **dadurch gekennzeichnet, dass** der Hub des beweglichen Haubenteiles (18; 52, 53) mindestens vier Fünftel seiner vertikalen Erstreckung beträgt.

6. Kantenbearbeitungsmaschine nach einem der voranstehenden Ansprüche, **dadurch gekennzeichnet, dass** das bewegliche Haubenteil (18) mittels Führungsschienen (29, 30) verschiebbar gehalten ist.

7. Kantenbearbeitungsmaschine nach Anspruch 6, **dadurch gekennzeichnet, dass** die Führungsschienen (29, 30) als Teleskopschienen ausgestaltet sind.

8. Kantenbearbeitungsmaschine nach einem der Ansprüche 1 bis 5, **dadurch gekennzeichnet, dass** das bewegliche Haubenteil (52, 53) an Führungsprofilen (55, 56, 57) verschiebbar gehalten ist.

9. Kantenbearbeitungsmaschine nach Anspruch 8, **dadurch gekennzeichnet, dass** die Führungsprofile (55, 56, 57) jeweils einen Kantenbereich des beweglichen Haubenteils (52, 53) in sich aufnehmen.

10. Kantenbearbeitungsmaschine nach Anspruch 8 oder 9, **dadurch gekennzeichnet, dass** die Führungsprofile (55, 56, 57) bogenförmig gekrümmt sind.

11. Kantenbearbeitungsmaschine nach Anspruch 8, 9 oder 10, **dadurch gekennzeichnet, dass** die Führungsprofile (55, 56, 57) mit ihren oberen Endbereichen (59, 60, 61) über die Haube (46, 47) hervorstehen.

12. Kantenbearbeitungsmaschine nach einem der Ansprüche 6 bis 11, **dadurch gekennzeichnet, dass** das bewegliche Haubenteil (52, 53) mittels Rollkörper in den Führungsschienen (29, 30) oder in den Führungsprofilen (55, 56, 57) verschiebbar gehalten ist.

13. Kantenbearbeitungsmaschine nach einem der voranstehenden Ansprüche, **dadurch gekennzeichnet, dass** die Kantenbearbeitungsmaschine (40) mehrere nebeneinander angeordnete Hauben (46, 47) aufweist, deren einander unmittelbar benachbarte, bewegliche Haubenteile (52, 53) an gemeinsamen Führungselementen (56) verschiebbar gehalten sind.
